Europäisches Patentamt

European Patent Office

Office européen des brevets

(11) Publication number: **0 010 833**
**A1**

## (12) EUROPEAN PATENT APPLICATION

(21) Application number: **79301471.3**

(22) Date of filing: **24.07.79**

(51) Int. Cl.³: **F 16 B 13/04**

(30) Priority: **26.10.78 GB 4209878**
**27.03.79 GB 7910706**

(43) Date of publication of application: **14.05.80**
**Bulletin 80/10**

(84) Designated Contracting States: **AT BE CH DE FR GB IT LU NL SE**

(71) Applicant: **Henry Lindsay Limited, Lindsay House Saltaire Road, Shipley, West Yorkshire BD18 3HJ (GB)**

(72) Inventor: **Alderton, Gordon Henry Scott, 1 Priory Grove, Bingley, West Yorkshire (GB)**

(74) Representative: **Orr, William Maclean et al, Haseltine Lake & Co Hazlitt House 28 Southampton Buildings Chancery Lane, London WC2A 1AT (GB)**

(54) Toggle.

(57) A fixing device (10) which can be mounted in a hole (18) in a structural member (19), such as a floor beam, and which can be engaged by an external component, such as part of a pipe support arrangement, in order to mount the latter on the structural support member (19). The fixing device (10) can be manipulated between a first position in which it presents minimal transverse cross-section so as to move upwardly through the hole (18) and thereafter to a second position in which the device presents a maximum transverse cross-section and engages diametrically opposed regions of the surface of the structural support member (19). The device (10) comprises a coupling portion (11) which can be seated in the hole (18) when the device (10) occupies the second position, and is internally tapped in order to receive part of a pipe support arrangement. A retaining portion (12) takes the form of an elongate plate and is rigidly connected to the coupling portion (11) in order to engage the diametrically opposed regions of the surface of the structural support member surrounding the hole (18). A handle portion (13) is pivotally mounted on the device (10) to enable the device to be manipulated between the first and second positions, and projects downwardly from the coupling portion (11) through the hole (18) when the device occupies the second position. The handle portion (13) then provides visual indication of the location at which an external component may be secured in position, and preferably can be detached subsequently from the coupling portion (11) when the external component has been connected thereto.

-1-

## Toggle

This invention relates to a fixing device which can be mounted in a hole in a structural support member, such as a floor beam, and which is engageable by an external component in order to mount the latter on the support member.

There are many known constructions of fixing device of the above general type and which fall into two categories, namely (a) a fixing device which has gripping portions which allow entry of the device into a hole, but which are moved radially outwardly into engagement with the wall of the hole; and (b) a fixing device which can be taken through a hole from one end thereof and which is thereafter caused to expand radially at the opposite end of the hole, to a size larger than the hole, in order to resist withdrawal of the fixing device through the hole in a direction towards said one end.

In the first type, the fixing device engages with the material of the support, in that it engages the wall which defines the hole, and in the second type it engages the material of the support which is closely adjacent to the mouth of the hole. This necessarily imposes a limitation on the maximum permissible loading of the fixing device, which will be dependant on the material, and quality of the material from which the support is made. This is a particular problem when the known fixing devices are used with supports made of non-metallic material, such as concrete.

The present invention has been developed primarily, though not exclusively, with a view to providing a fixing device which can be mounted in a hole in a concrete support to enable a component to be suspended therefrom, the fixing device having an improved supportive engagement with the material of the support than would be possible with the known constructions.

According to the invention there is provided a fixing device which can be mounted in a hole in a structural member and which is engageable by an external component in order to mount the latter on the structural member, the fixing device being manipulatable between a first position in which the device can be moved through the hole from one end thereof and a second position in which the device is engageable with the surface surrounding the entrance to the hole at the opposite end thereof in order to resist withdrawal of the fixing device in a direction towards said one end of the hole, in which the device comprises:

a coupling portion which is engageable in use by a component when the device occupies said second position;

a retaining portion which is rigidly connected to said coupling portion and which is movable through the hole with said coupling portion when the device occupies said first position, and which is movable to an engagement position in which the retaining portion is engageable with two diametrically opposed portions of said surface surrounding the hole at said opposite end· when the device occupies said second position;

and a handle portion which is pivotally mounted on the device to enable the device to be manipulated between said first and second positions.

Preferably, the device presents a minimal transverse profile when it occupies the first position to move through the hole, whereas the device has a maximum transverse profile in its second position so that the retaining portion can have a substantial area of contact with the

surface of the support surrounding the hole.

The fixing device according to the invention is particularly suitable for use in suspending a component, such as a pipe support, from a structural ceiling and/or floor member e.g. a hollow or solid concrete slab. The fixing device is held by the handle portion by an operator and is offered to the hole, with the retaining portion extending upwardly (after appropriate manipulation if neccesary), and is moved upwardly until the entire retaining portion is located at the other (upper) end of the hole. Thereafter, the device is manipulated e.g. by gentle shaking, so as to take up the second (horizontal) position. The coupling portion is received by the mouth of the hole, and the retaining portion bridges the mouth of the hole and engages diametrically opposed portions of the surface surrounding the hole.

Preferably, the pivotal mounting of the handle portion is located non-coincident with the center of gravity of the retaining portion, so that the retaining portion can fall under gravity into the second position. Conveniently, the retaining portion is generally planar e.g. a narrow plate, and the pivotal mounting may sub-divide the plate into a short limb, and a relatively longer limb, and may be offset laterally therefrom to a small extent. Thereby, when the handle portion extends upwardly and the device occupies the first position, the short limb may be arranged to abut the handle portion at a slight inclination to the vertical so that a stable arrangement is obtained, which facilitates the offering of the device to the hole. When the device is manipulated so as to occupy the center position, the retaining portion moves under gravity to occupy the (stable) second position.

The handle portion may take any convenient form, such as a U-shaped wire which has its free ends bent-over to form pivots for the handle portion, which are received in holes formed in the device, preferably in the coupling portion.

After mounting in positon of the device, the handle portion will project through the hole to give visual indication of the intended support locations. Conveniently, the handle portion is readily disconnectable from the device by appropriate manipulation thereof e.g. by laterally displacing the limbs of the U-shaped wire. The device will remain mounted in position, in that the coupling portion is received in the hole.

The coupling portion may be formed with a tapped hole into which a component, such as a threaded rod or a bolt, can be screwed.

As described above, the device may be arranged so that the retaining portion can fall under gravity into the second position, in that the pivotal mounting of the handle portion is located non-coincident with the centre of gravity of the retaining portion by being positioned other than mid-way along the length of a retaining portion having constant thickness. However, other arrangements are possible to achieve the objective of allowing the retaining portion to fall under gravity into the second position. Thus, by way of example, the pivotal mounting may be located substantially mid-way along the length of the retaining portion so as to sub-divide the latter into substantially equal length limbs, but one of the limbs will be made so as to be heavier than the other of the limbs.

Conveniently, this may be achieved by forming said other of the limbs to have uniform thickness, and said one of the limbs to be of progressively increasing thickness. However, it will be evident that many other arrangements are possible to achieve the desired objective.

The device according to the invention is particularly suitable for suspending, from a ceiling/floor slab, pipework which forms part of an automatic fire prevention sprinkler system. However, it should be appreciated that the fixing device may readily be mounted, or adapted to be mounted, in holes in structural members disposed, other than horizontally e.g. vertically.

Conveniently, the coupling portion and the retaining portions are cast in one piece from malleable iron. Alternatively, for certain uses, the device may be formed in stainless steel.

Two embodiments of fixing device according to the invention will now be described in detail, by way of example only, with reference to the accompanying drawings in which:

Figure 1 is a diagrammatic illustration of the manner by which a first embodiment of fixing device is mounted in a hole in a concrete ceiling slab;

Figure 2 is an end view of the fixing device;

Figure 3 is a side view of the fixing device;

Figure 4 is a plan view of a second embodiment of fixing device;

Figure 5 is a side view of the second embodiment; and

Figure 6 is an end view of the second embodiment.

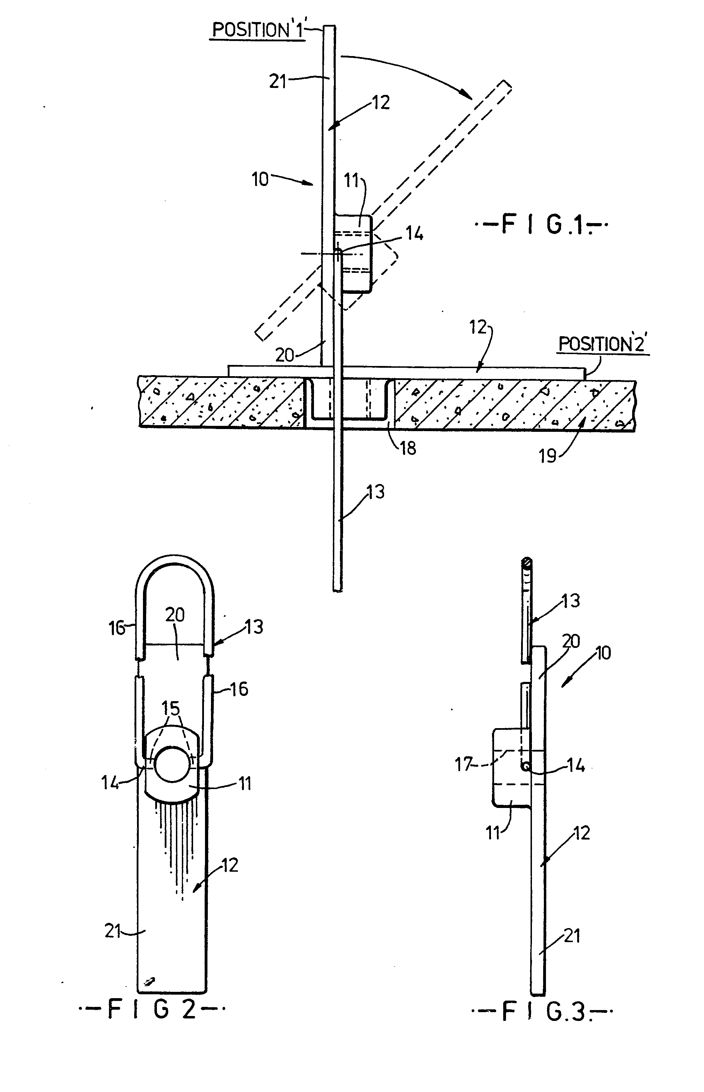

Referring now to Figures 1 to 3 of the drawings, the fixing device is designated generally by reference numeral 10 and comprises a coupling portion 11, a retaining portion 12 and a handle portion 13. The coupling portion 11 and retaining portion 12 are rigidly connected together and are preferably cast in one piece from malleable iron. The handle portion 13 is pivotally connected to the device 10, in that it is pivotally mounted on the coupling portion 11.

As seen particularly in Figure 2 , the handle portion 13 comprises a U-shaped piece of wire which has its free ends 14 bent-over to form pivots for the handle portion which are received in holes 15 formed in the coupling portion 11. The handle portion 13 provides a convenient means for manipulating the device 11 to any desired position, and is thereafter readily disconnectible by appropriate lateral displacement of the limbs 16 of the handle portion 13.

The coupling portion 11 is engageable by an

external component (not shown) in order to mount the latter on a structural member.  To this end, conveniently the coupling portion 11 is formed with a tapped bore 17 into which a component such as a bolt or threaded rod can be screwed.

Referring now particularly to Figure 1 of the drawings, there is illustrated diagrammatically the manner by which the device 10 can be mounted in position in a hole 18 formed in a horizontal concrete ceiling/floor slab 19.  The device 10 is offered to the hole 18 by an operator holding the handle portion 13 and moving the device 10 upwardly through the hole 18, with the device 10 occupying the first position, designated "position 1" in Figure 1.  It will be noted that the handle portion 13 extends substantially vertically, and so also does the retaining portion 12.  This is a substantially stable arrangement, since it will be noted from Figure 1 that the pivots 14 are laterally offset from the general plane of the retaining portion 12, and the general arrangement of the coupling portion 11 and retaining portion 12 imparts an anticlockwise turning moment about the pivot 14 for the portions 11 and 12.

It will be noted also from the drawings that the pivots 14 subdivide the retaining portion 12, which comprises a narrow plate, into a short limb 20 and a relatively longer limb 21.  The anticlockwise turning moment urges the short limb 20 towards the handle portion 13, but as will be evident from Figure 2, the limbs 16 of the handle portion 13 are arranged in the path of movement of the short limb 20.  Therefore, the anticlockwise moment imparted to the limb 20 in Figure 1 only urges the limb 20 into abutment with the limbs    16 of the handle portion 13, whereby a substantially stable arrangement is provided for the device in its first position.

When the device 10 is in its first position, it presents a miminum transverse profile, whereby the device can be readily offered to, and passed through the hole 18. When the retaining portion 12 has passed completely through the hole 18, the device is manipulated via the handle portion 13, e.g. by gentle shaking, so that the device 10 can pivot on the pivot 14 so as to occupy a second position, designated "position 2", in which the retaining portion 12 engages the upper surface of the slab 19 so as to resist downward withdrawal of the device 10. In order to occupy the second position, the device 10 is manipulated by the handle portion 13 so that the coupling portion 11 becomes seated in the mouth at the upper end of the hole 18, and the retaining portion 12 engages diametrically opposed portions of the surface surrounding the mouth at the upper end of hole 18. It will be noted that the retaining portion 12 has a substantial area of contact with the upper surface of the slab 19, so that localised high stressing in the region adjacent the mouth of the upper end of hole 18 is avoided. In this respect, it should be borne in mind that known fixing devices have only a small area of surface contact, and this small area is usually closely adjacent to the mouth of the hole . When the hole is provided in a slab of a non-metallic material such as concrete, there is a significant risk of crumbling of the material of the slab when undue loading is applied to known fixing devices.

By contrast, the retaining portion 12 has a substantial area of contact throughout which a substantially uniform pressure can obtain . Furthermore, in order to increase the load bearing properties of the device 10, it is a simple matter to increase the length of the retaining portion 12 so as to provide the required area of contact. By increasing the length of the retaining portion 12, it will be necessary to project the device 10, via handle portion 13, through a greater distance in order to allow the short limb 20 to be taken completely through the hole 18, but this can be readily allowed for by providing a suitable increase in the length of the handle portion 13, if necessary.

In order to manipulate the device 10 from its first position to its second position, the handle portion 13 is manipulated so as to bring the center of gravity of the portions 11 and 12 to such a position that a clockwise turning moment is imparted thereto, with respect to the pivots 14, whereby the retaining portion 12 falls under gravity to the second position. Appropriate manipulation of the handle portion 13 can cause the coupling portion 11 to enter the mouth of the hole 18.

Following the mounting in position of the device 10, the handle portion 13 will project downwardly through the hole 18 so as to give visible indication of an intended support location. Furthermore, if desired, the device 10 can be removed from its mounted position in hole 18 by suitable further manipulation of the handle portion 13 so as to move the device 10 from the second position to the first position, followed by downward withdrawal of the device 10.

Usually, when an external component is to be mounted on the support slab 19, the handle portion 13 will be disconnected, and the component will be engaged with the coupling portion 11. The fixing device is particularly suitable for use in suspending pipework of a fire prevention sprinkler system from a ceiling/floor slab, and such pipework can be carried by any convenient pipe holding arrangement, such as a U-clip, which, in turn, is coupled with the rod or bolt which engages with the coupling portion 11.

While the fixing device 10 is primarily intended to be mounted in a through-hole in a horizontal slab, the invention should not be considered as limited to such use of the fixing device. It should be appreciated that the fixing device 10 may be mounted readily in holes in support members disposed other than horizontally, e.g. vertically.

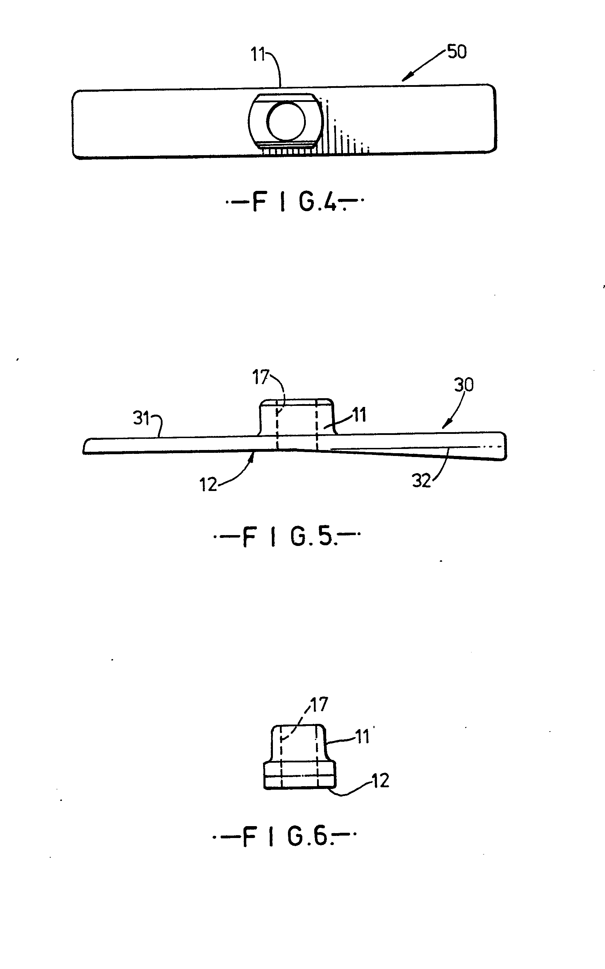

Referring now to Figures 4 to 6 of the drawings, there is shown a second embodiment of fixing device 30 which is generally similar in construction to the first embodiment, and corresponding parts are designated by the same reference numerals. However, a handle portion, and the mode of use of the second embodiment 30, are not shown, but may be as described above with reference to Figures 1 to 3.

As will be evident from Figures 1 to 3, the retaining portion 12 is of uniform thickness throughout its length, and the retaining portion 12 is able to pivot under gravity from the vertical position to the horizontal position as shown in Figure 1, in that the pivot provided by the ends 14 is located other than mid-way along the length of the retaining portion 12. However, as will be evident from the description with reference to Figures 4 to 6, this is not the only means whereby the pivot can be located non-coincident with the centre of gravity of the retaining portion 12. Thus, as will be evident from Figures 4 and 5, the coupling portion 11 is located mid-way along the length of the retaining portion 12, so that the pivot for the handle portion (not shown) also will be located mid-way along the length of the retaining portion 12. However, the equal length limbs 31 and 32 of the retaining portion 12 are differently constructed, so that the centre of gravity is located non-coincident with the pivot for the handle portion. As illustrated, the limb 31 is of uniform thickness throughout its length, whereas the limb 32 has a thickness which increases progressively with distance away from the coupling portion 11. The retaining portion 12 is of constant width throughout its length, so that the limb 32 will therefore be heavier than the limb 31, so as to enable the retaining portion 12 to pivot downwardly under gravity from from a vertical position to a horizontal position.

Although not shown, it will be evident that other means may be adopted to enable the limb 32 to be heavier than the limb 31.

For certain uses of the embodiment shown in

-10-

0010833

Figures 4 to 6, it will be advantageous for the device to be formed in stainless steel.

The fixing device according to the invention may be mounted in holes in structural members, such as concrete floor/ceiling slabs as described above, but is also particularly suitable for mounting in holes in steel structural members of hollow section.

As will be evident from the drawings, the handle portion of the fixing device is arranged in such a way that its lateral extent is equal to, or only slightly larger than the lateral extent of the retaining portion of the fixing device. Evidently, this will facilitate the manner by which the device is offered-up to a hole in a structural member, since the hole will only have to be of sufficient dimension to allow passage therethrough of the retaining portion. If the handle portion should project laterally to a considerable extent from the retaining portion, the hole in the structural member would have to be correspondingly enlarged, and be that much greater than the coupling portion which is eventually seated in the hole. Also, the retaining portion will be maintained in an upright position, by engagement with the handle portion, when it is offered-ip to the hole in the structural member.

<u>CLAIMS</u>

1.      A fixing device (10) which can be mounted in a hole (18) in a structural member (19) and which is engageable by an external component in order to mount the latter on the structural member (19), the fixing device (10) being manipulatable between a first position in which the device can be moved through the hole (18) from one end thereof and a second position in which the device is engageable with the surface surrounding the entrance to the hole (18) at the opposite end thereof in order to resist withdrawal of the fixing device in a direction towards said one end of the hole, characterised in that the device (10) comprises: a coupling portion (11) which is engageable in use by a component when the device (10) occupies said second position;

a retaining portion (12) which is rigidly connected to said coupling portion (11) and which is moveable through the hole (18) with said coupling portion (11) when the device occupies said first position, and which is moveable to an engagement position in which the retaining portion (12) is engageable with two diametrically opposed portions of said surface surrounding said hole at said opposite end when the device occupies said second position;

and a handle portion (13) which is pivotally mounted on the device (10) to enable the device to be manipulated between said first and second positions.

2.      A device according to claim 1, characterised in that the pivotal mounting (14) of the handle portion (13) is located non-coincident with the centre of gravity of the retaining portion (12).

3.      A device according to claim 1 or 2, characterised in that the retaining portion (12) comprises a narrow plate.

4.      A device according to claim 3, characterised in that the pivotal mounting (14) of the retaining portion (12) subdivides the latter into a short limb (20) and a long limb (21).

5.       A device according to claim 3, characterised in that the pivotal mounting (14) of the retaining portion (12) sub-divides the latter into equal length limbs, one (32) of said limbs being heavier than the other (31) of said limbs.

6.       A device according to any one of the preceding claims, characterised in that the handle portion (13) comprises a U-shaped wire.

7.       A device according to claim 6, characterised in that the handle portion (13) is disconnectable from the coupling portion (11).

8.       A device according to any one of the preceding claims, characterised in that the coupling portion (11) is formed with a tapped hole into which a component can be threaded.

9.       A device according to any one of the preceding claims, characterised in that the handle portion (13) has substantially the same lateral extent as the retaining portion (12).

0010833

POSITION '1'

21

12

10

11

14

-FIG.1-

20

12

POSITION '2'

18

19

13

16

20

13

13

15

14

11

20

10

17

14

16

11

12

14

11

12

21

21

-FIG 2-

-FIG.3-

0010833

—F I G.4.—

—F I G.5.—

—F I G.6.—

## European Patent Office
## EUROPEAN SEARCH REPORT

# DOCUMENTS CONSIDERED TO·BE RELEVANT

| Category | Citation of document with indication, where appropriate, of relevant passages | Relevant to claim |
|---|---|---|
| | DE - C - 1 121 792 (FISCHER) <br> * fig. 1 to 3 * | 1-4 |
| | DE - U - 1 936 278 (TOX-DÜBEL) <br> * fig. 2 * | 1-3, 5 |
| | CH - A - 516 748 (FISCHER) <br> * fig. 1 to 4 * | 1-3 |
| | DE - A - 1 930 994 (FREY) <br> * fig. 1 * | 1,3 |
| | US - A - 2 919 089 (DURHAM) <br> * fig. 1 to 8 * | 1,7 |
| | FR - A - 612 745 (HENRI) <br> * fig. 1 to 6 * | 1,8 |
| | DE - C - 577 002 (POZIMSKI) <br> * fig. 1 to 6 * | 1 |
| | DE - B-1 296 883 (FISCHER) <br> * fig. 1 to 4 * | 1 |
| | ./.. | |

**CLASSIFICATION OF THE APPLICATION (Int. Cl.3)**

F 16 B 13/04

**TECHNICAL FIELDS SEARCHED (Int.Cl.3)**

F 16 B 13/04
F 16 B 17/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 05-11-1979 | ZAPP |

EPO Form 1503.1 06.78

**European Patent Office**

## DOCUMENTS CONSIDERED TO BE RELEVANT

| Category | Citation of document with indication, where appropriate, of relevant passages | Relevant to claim |
|---|---|---|
| | DE - U - 6 934 131 (BETTERMANN ELEKTRO) <br> * fig. 1 to 3 * <br> -- | 1 |
| | DE - U - 7 128 168 (BETTERMANN ELEKTRO) <br> * fig. 1 * <br> -- | 1 |
| | AT - B - 256 563 (LOUIS AACKERS- BERG MORTENSEN) <br> * fig. 1 to 5 * <br> -- | 1 |
| | FR - A - 1 464 833 (ALPHAZAN) <br> * fig. 3 * <br> -- | 1 |
| | US - A - 1 556 345 (PLEISTER) <br> * fig. 1 to 6 * <br> ---- | 1 |

**CLASSIFICATION OF THE APPLICATION (Int. Cl.3)**

**TECHNICAL FIELDS SEARCHED (Int. Cl.3)**

EPO Form 1503.2  06.78